# EUROPEAN PATENT SPECIFICATION

(11) **EP 3 385 031 B1**
(45) Date of publication and mention of the grant of the patent: **15.10.2025**
(21) Application number: 18150553.8
(22) Date of filing: 20.03.2008
(51) Int. Cl.: B24B 23/02, B24B 23/04, H02P 6/00, H02P 29/00, H02M 1/42

(54) **METHOD FOR CONTROLLING AN ELECTRIC SANDING MACHINE AND ELECTRIC SANDING MACHINE**
VERFAHREN ZUM REGELN EINER ELEKTRISCHEN SCHLEIFMASCHINE UND ELEKTRISCHE SCHLEIFMASCHINE
PROCÉDÉ POUR CONTRÔLER UNE MACHINE DE MEULAGE ÉLECTRIQUE ET MACHINE DE MEULAGE ÉLECTRIQUE

(30) Priority: 21.03.2007 FI 20075183; 22.08.2007 FI 20075582
(43) Date of publication of application: 10.10.2018
(62) Divisional of application: 12164398.5
(73) Proprietor: Mirka Oy, 66850 Jeppo (FI)
(72) Inventor: Nordström, Caj, 66850 Jeppo (FI)
(74) Representative: Hoffmann Eitle

(56) References cited:
- EP-A2- 0 805 548
- EP-A2- 0 982 845
- US-A1- 2006 132 081
- "Power factor corrector, Application manual", POWER FACTOR CORRECTOR, XX, XX, vol. first ed, 1 October 1995 (1995-10-01), pages 7 - 19, XP007906468
- KIT SUM K: "IMPROVED VALLEY-FILL PASSIVE POWER FACTOR CORRECTION CURRENT SHAPER APPROACHES IEC SPECIFICATION LIMITS", MANUSCRIPT SWISSBALL EXERCISES, XX, XX, vol. 24, no. 2, 1 February 1998 (1998-02-01), pages 42,44,47 - 51, XP000901396

## Description

### TECHNICAL FIELD

The present invention relates to an compact electric hand-held sanding machine with an outer housing and a tool shaft.

### PRIOR ART

Electric sanding machines of the same type are previously known from, for example, US patent 0245182. Here, the intention has been to make a relatively compact and low sanding machine by using a brushless motor and making the proportion between the motor diameter and the motor height great. The drawback of this solution is that the motor diameter unavoidably becomes large and therefore also difficult to be gripped with one hand. Further, since the diameter is large, it becomes disadvantageous to make a hermetic motor with cooling only on the outside. This is very disadvantageous because the air in which the sanding machine is most often used is filled by dust particles that may be both electrically conductive and grinding by nature.

Since electric sanding machines have previously been so large and heavy, it has been necessary to have special sanding machines in, for example, wall grinding. Machines of this type are previously known from, for instance, US patent 5239783 or EP0727281. In these patents, a sanding machine for walls has been made by moving the motor to the far end of the arm and by, for example, using a cable for transmitting power to the grinding head. In this way, balance has been achieved for the machine, but this also makes the machine expensive and difficult to manufacture.

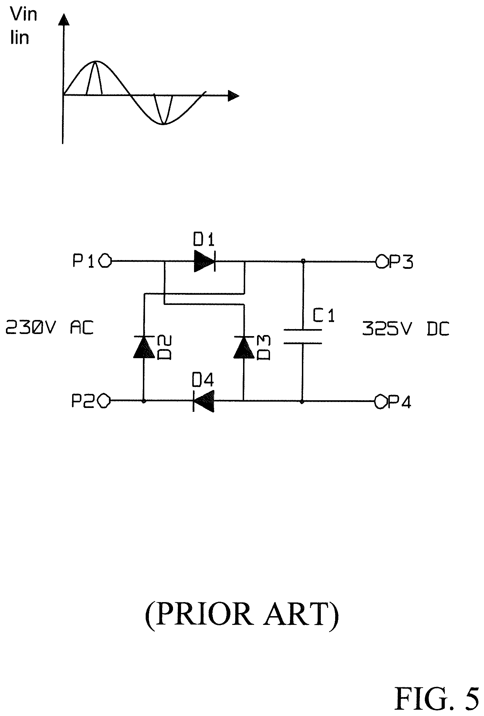

Within the EU and many other markets, there are regulations on how much interference may be generated to the network. Within the EU, standard EN61000-3-2 with amendment A14 is applied. If a switched control unit is made in the simplest way possible by rectifying the mains voltage according to Figure 5 and subsequently having so large a capacitor that the following control can continuously take current until the following pulse comes, very high harmonic components are obtained which interfere with the electric network.

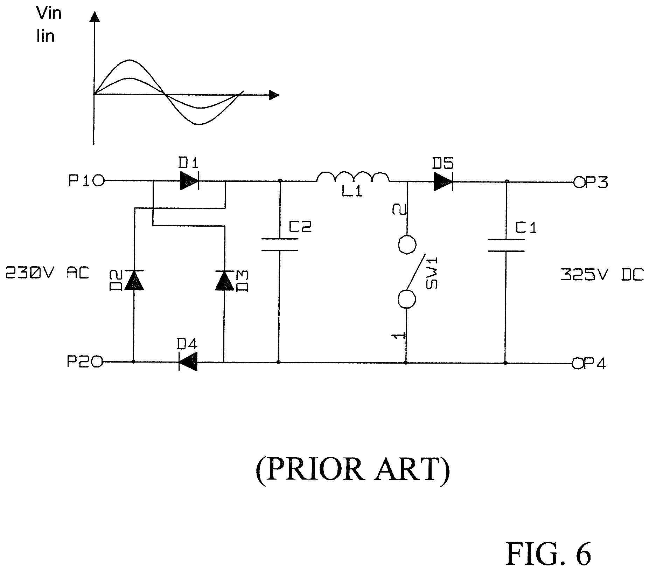

There are two conventional ways of solving this problem: A passive way by filtering the current and voltage with inductances and capacitors, and an active way. The passive way requires space as well as a great volume and weight. The active way functions in such a way that the voltage is first switched with the known "step-up" topology according to Figure 6 in such a way that the relation between the input current and the input voltage corresponds to a resistive load. The output voltage is always higher than the top value of the input voltage. The drawback with the active way is that the current goes through an extra inductance L1 and is, in addition, switched one more time, because the power correction is always followed by a switched control unit.

### BRIEF DESCRIPTION OF THE INVENTION

An object of the present disclosure is to alleviate above mentioned disadvantages. The sanding machine according to the disclosure is characterized in that it has an electric drive motor that is brushless and without a shaft of its own, mounted in such a way that the rotor is fastened to the tool shaft and the stator is positioned in the outer housing. A sanding machine constructed in this way has a compact structure allowing the sanding machine to be gripped ergonomically with one hand. The compact structure enables a manner of use and a device in the form of an arm that can be fastened to the sanding machine for a comfortable two-hand grip and an extended range of operation for the machine. At the same time, the disclosure enables a hermetic structure in which the cooling air passes only on the outside of the stator and which is thus very insensitive to impurities in the cooling air. Since the sanding machine also has a low profile, the control of the grinding properties of the machine is good.

The motor type used in the invention is what is called BLDC (Brushless Direct Current) motor. Due to the strong magnetic field of the new NdFeB magnets, the motor has high power per volume and high efficiency. Thanks to these features, it has been possible to make the motor sufficiently small to enable this invention. An advantageous solution is to use a slotless version of the BLDC motor. The slotless motor has smaller iron losses and a more advantageous price because the iron core of lamination stacks has a simpler form, and the winding is simpler to carry out.

The tool shaft has a eccentrically positioned tool holder and the rotor of the drive motor without own shaft is fastened to the tool shaft, and stator is positioned in the outer housing. The tool shaft is arranged to extend within the rotor of the drive motor and therefore replaces it's own shaft.

The prior art tools have a tool shaft that is without eccentricity and balance weights. The eccentricity is made with an external part that is fastened to the motor shaft. The reason for making the eccentricity with an external part is that then the rotor can be fastened to the shaft in conventional way and the bearings can be assembled from both ends. This solution makes the sander much less compact.

The cooling air is generated by a blower that is mounted on the tool shaft and can advantageously be integrated in the same vertical direction as the balance weights of the tool shaft. The same cooling air that cools the motor first cools the control unit.

Since the sanding machine is much lighter and more compact than known electric sanding machines, special sanding machines intended for wall grinding have become completely unnecessary. Previously, it has been necessary to make the grinding head lighter by moving the motor to the other end of the arm but with the consequence that transmission with a cable or shafts is needed. The sanding machine can be fastened to the end of an arm in such a way that it is freely mobile in one or more flexible directions. Since the sanding machine is so light, it is still as easy to handle as special wall sanding machines having complicated and expensive transmission. If dust extraction is needed, it is advantageous to lead the extraction to a hollow arm.

According to the present invention control of the motor is carried out electronically to be able to vary the speed of rotation. The control unit is made in such a way that the speed of rotation is kept on a given level irrespective of the load of the machine. The control unit may preferably be positioned in connection with the sanding machine. A preferable solution is to use sensorless control, i.e. control without a sensing device to determine the position of the rotor in the electronic commutation. The sensorless control usually utilizes the voltage generated in the phase that is not conducting to determine the position of the rotor.

The position of the rotor in the electric commutation can also be determined on the basis of the currents generated in the different phases or the relation between current and voltage in the phases.

When the control is sensorless, the motor is more compact because the sensors, most often Hall sensors, make the motor considerably longer.

According to the present invention for a switched control unit, the motor is dimensioned in such a way that the nominal voltage of the motor is lower than the top value of the rectified mains voltage. When current is consumed during that part of the cycle when the voltage is higher than the nominal voltage of the motor and no current is consumed when the voltage is lower than the nominal voltage of the motor, different degrees of power correction are obtained, depending on how much lower the nominal voltage is. If the time during which the current corresponds to an optimal load in relation to the whole cycle is sufficiently long, the harmonic components generated back to the electric network will be within the allowed values. When mains voltage of 230 V is rectified, a top value of 325 V is obtained. If the nominal voltage of the motor is, for example, 200 V, there is a current flow approximately 60 % of the time. The current is generated in such a way that no current flows when the rectified mains voltage is equal to the nominal voltage, and it increases linearly in such a way that the current is 10 A when the voltage is 325 V. This gives an effective power of approximately 1,100 W. The third harmonic current component is thus 2.4 A, which is within the allowed limit for a portable hand tool. The other harmonic components also have allowed values. Since the windings of the motor form a coil with self-inductance L1, the switched control unit can also be preferably made without external inductances.

### BRIEF DESCRIPTION OF THE FIGURES

The invention is described in more detail in the following with reference to the attached drawings, in which
Figure 1 shows a top view of the sanding machine;
Figure 2 shows a side view of the sanding machine;
Figure 3 shows a cross-section along line A-A;
Figure 4 shows a cross-section along line B-B;
Figure 5 shows an electricity drawing of prior art control;
Figure 6 shows prior art power correction;
Figure 7 shows a first embodiment of new motor control; and
Figure 8 shows a second embodiment of the motor control.

### PREFERRED EMBODIMENTS

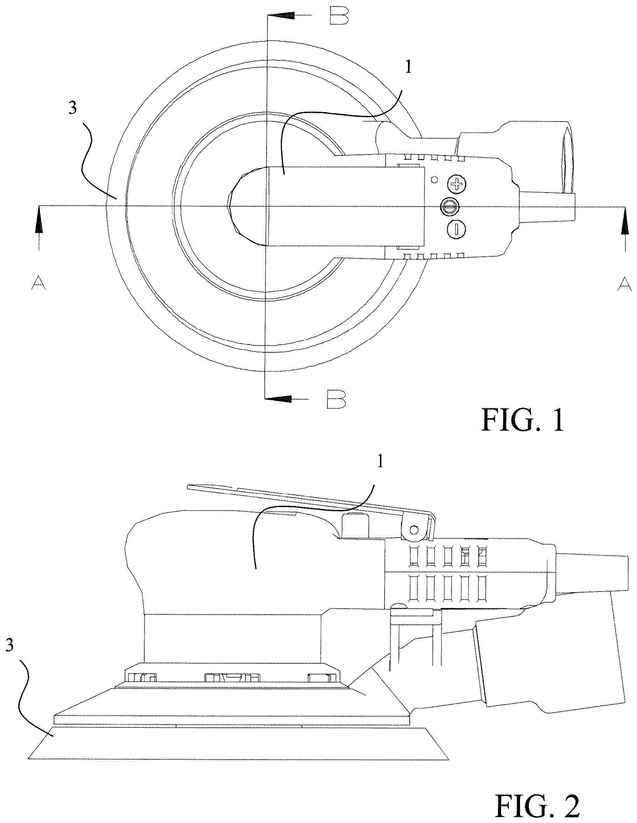

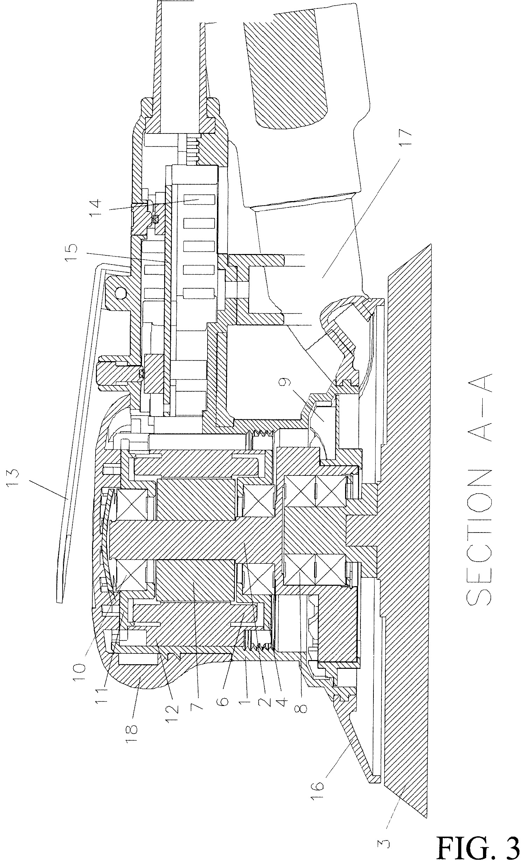

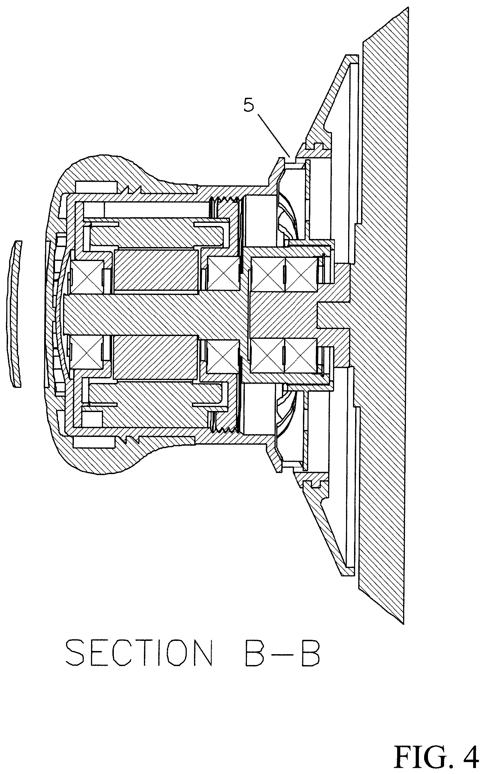

The sanding machine shown in Figures 1 to 4 is formed of a housing 1 enclosing all parts of the motor. The motor is formed of a stator 6, including a casing with cooling fins 12 and a rotor 7. These parts are integrated with the parts keeping a tool shaft 2, a bearing housing at both ends 4, 11 and a bearing 10 in place, in such a way that the rotor 7 is fastened to the tool shaft 2. The casing and cooling fins of the stator 6 are shaped in such a way that an air slot is generated which is limited by the casing, the housing of the sanding machine and the cooling fins. The grinding disc 3 is fastened freely rotationally to the tool shaft 2 via an eccentric bearing 8. The blower 9, which is fastened to the tool shaft 2 preferably at the same height as the balance weights, sucks in air through the hole 14. The air cools the control unit 15 and then the motor via the cooling fins 12. The air is blown out through the hole 5. The shroud 16 collects the grinding dust that is sucked out through the grinding disc 3 and further out through the extraction pipe 17. The switch 13 is in connection with the control unit and attends to the switching on and switching off ergonomically. A soft part 18 around the casing makes the machine grip-friendly. In another embodiment, the disc is not freely rotating, but the disc is rotating with or without eccentric movement through a connection to the tool shaft 2.

The rotor is prevented to rotate in respect to the shaft with a woodruff key where the corresponding slot is shown in the rotor in picture 4. The rotor can also be prevented to rotate with other kind of keys or with splines.

The balance weights that are integrated in the tool shaft are so large that the bearing 10 (lower part) has to be mounted before the rotor is fastened to the tool shaft.

To enhance the compactness the bearings 10 and the bearing housings 4, 11 are partly or fully inside the stator 6 or the windings.

In another embodiment, the dust extraction also attends to the cooling of the motor in such a way that part of the air is sucked via the motor and the cooling fins, and in this way the motor cools off without a separate blower.

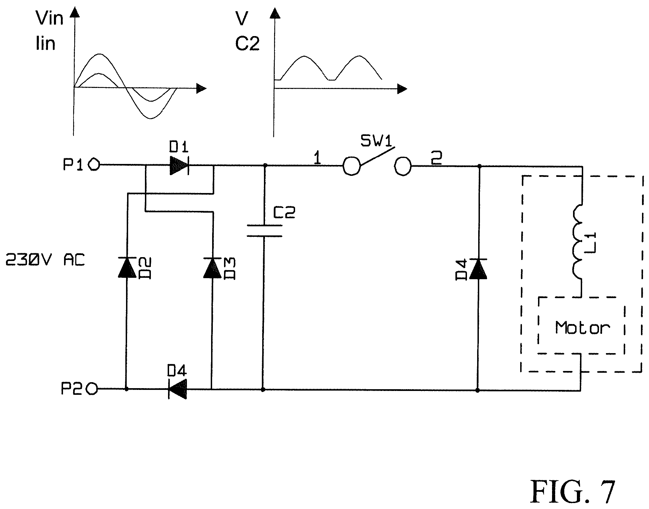

Functioning of the power correction of the control unit in a first embodiment is described in Figure 7. The mains voltage is rectified and the following capacitor C2 is so small that the voltage follows the rectified voltage. The motor is dimensioned in such a way that the nominal voltage of the motor is so much lower than the top value of the rectified mains voltage in relation to the required power that power correction is obtained when current is consumed during that part of the cycle when the voltage is higher than the nominal voltage of the motor and no current is consumed when the voltage is lower than the nominal voltage of the motor. The control unit utilizes the well-known "step-down" topology in such a way that the relation between current and voltage is optimized so that smallest harmonic components possible are generated, and thus also the best possible power correction is achieved in that part of the cycle in which the voltage is higher than the nominal voltage of the motor. If the voltage is lower than the nominal voltage, no power is taken to the motor. If the time when the current corresponds to the optimal load in relation to the whole cycle is sufficiently long in relation to the required power, the harmonic components generated back to the electric network will be within allowed values. If the self-inductance L1 of the motor is sufficiently great, the control unit can preferably be made without external inductances. The motor in Figure 7 has been simplified in such a way that only one switch SW1 is shown. In practice, electronically commutated 3-phase control is directly carried out for the motor.

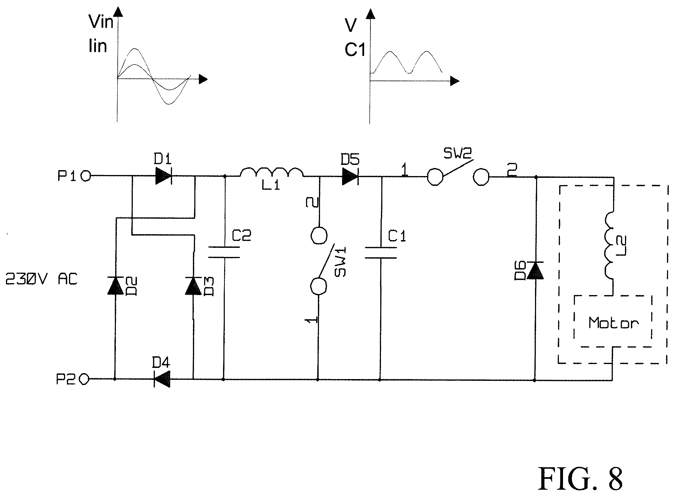

If the power correction obtained is not sufficient, the function can be further improved according to the embodiment in Figure 8. Here, an external inductance L1 and an extra switch according to "step-up" topology have been incorporated to carry out power correction also during the time when the voltage is lower than the nominal voltage of the motor. The connection is still preferable because the current and the voltage are lower than in a case where the power correction should be carried out during the whole cycle. Above all, the value at the external inductance L1 may be lower because the voltage is lower when the switching is carried out.

The above description and the related figures are only intended to illustrate a present solution for the structure of a sanding machine. Thus, the solution is not confined merely to the above or the embodiment described in the attached claims, but a plurality of variations or alternative embodiments are feasible within the idea described in the attached claims.

### THE FOLLOWING POINTS ARE ALSO PART OF THE DISCLOSURE

1. A control method for an electric sanding machine, which method comprises rectification of the mains voltage and switched motor control, **characterized** by the motor being dimensioned in such a way that the nominal voltage of the motor is so much lower than the top value of the rectified mains voltage in relation to the required power that sufficient power correction is obtained when current is consumed during that part of the cycle when the voltage is higher than the nominal voltage of the motor and no current is consumed when the voltage is lower than the nominal voltage of the motor.
2. A control method according to item 1, **characterized** by the relation between current and voltage is optimized in that part of the cycle in which the voltage is higher than the nominal voltage of the motor so that smallest harmonic components possible are generated and, thus also the best possible power correction is obtained.

## Claims

1. A method for controlling an electric sanding machine comprising an electric drive motor that is a brushless direct current motor, which method comprises rectification of the mains voltage and switched control of the motor,
wherein the motor is dimensioned in such a way that the nominal voltage of the motor is lower than the top value of the rectified mains voltage,
wherein the motor comprises neodymium, NdFeB, magnets,
wherein current is consumed during that part of the cycle when the voltage is higher than the nominal voltage of the motor and no current is consumed when the voltage is lower than the nominal voltage of the motor, such that different degrees of power correction are obtained depending on how much lower the nominal voltage is, and
wherein control of the motor is carried out electronically to be able to vary the speed of rotation, and the control is made in such a way that the speed of rotation is kept on a given level irrespective of a load of the electric sanding machine.

2. The method according to claim 1, whereby if the mains voltage is 230 V, the top value of the rectified mains voltage is 325 V and the nominal voltage of the motor is 200 V, the current flows approximately 60% of the time, whereby the current is generated in such a way that no current flows when the rectified mains voltage is equal to the nominal voltage, and it increases linearly in such a way that the current is 10 A when the voltage is 325 V.

3. An electric sanding machine comprising a brushless direct current motor and a control unit configured for rectification of a mains voltage and switched motor control,
wherein the motor is dimensioned in such a way that the nominal voltage of the motor is lower than the top value of the rectified mains voltage,
wherein the motor comprises neodymium, NdFeB, magnets,
wherein depending on how much lower the nominal voltage is, different degrees of power correction are obtained, when current is consumed during that part of the cycle when the voltage is higher than the nominal voltage of the motor and no current is consumed when the voltage is lower than the nominal voltage of the motor, and
wherein the control of the motor is carried out electronically to be able to vary the speed of rotation, and the control unit is made in such a way that the speed of rotation is kept on a given level irrespective of a load of the electric sanding machine.

4. The electric sanding machine according to claim 3, whereby if the mains voltage is 230 V, the top value of the rectified mains voltage is 325 V and the nominal voltage of the motor is 200 V, the current flows approximately 60% of the time, whereby the current is generated in such a way that no current flows when the rectified mains voltage is equal to the nominal voltage, and it increases linearly in such a way that the current is 10 A when the voltage is 325 V.

## Patentansprüche

1. Verfahren zum Regeln einer elektrischen Schleifmaschine, die einen elektrischen Antriebsmotor umfasst, der ein bürstenloser Gleichstrommotor ist, wobei das Verfahren die Gleichrichtung der Netzspannung und die geschaltete Steuerung des Motors umfasst,
wobei der Motor so dimensioniert ist, dass die Nennspannung des Motors kleiner ist als der Spitzenwert der gleichgerichteten Netzspannung,
wobei der Motor Neodym-, NdFeB-, Magnete umfasst,
wobei während des Teils des Zyklus, wenn die Spannung höher als die Nennspannung des Motors ist, Strom verbraucht wird und kein Strom verbraucht wird, wenn die Spannung niedriger als die Nennspannung des Motors ist, sodass unterschiedliche Grade der Leistungskorrektur erhalten werden, je nachdem, wie viel niedriger die Nennspannung ist, und
wobei die Steuerung des Motors elektronisch erfolgt, um die Drehgeschwindigkeit variieren zu können, und die Steuerung so erfolgt, dass die Drehgeschwindigkeit unabhängig von einer Belastung der elektrischen Schleifmaschine auf einem bestimmten Niveau gehalten wird.

2. Verfahren nach Anspruch 1, wobei bei einer Netzspannung von 230 V, einem Spitzenwert der gleichgerichteten Netzspannung von 325 V und einer Nennspannung des Motors von 200 V, der Strom zu etwa 60 % der Zeit fließt, wobei der Strom so erzeugt wird, dass kein Strom fließt, wenn die gleichgerichtete Netzspannung gleich der Nennspannung ist, und er linear so ansteigt, dass der Strom 10 A beträgt, wenn die Spannung 325 V beträgt.

3. Elektrische Schleifmaschine, die einen bürstenlosen Gleichstrommotor und eine Steuereinheit umfasst, die für die Gleichrichtung einer Netzspannung und die geschaltete Motorsteuerung konfiguriert ist,
wobei der Motor so dimensioniert ist, dass die Nennspannung des Motors kleiner ist als der Spitzenwert der gleichgerichteten Netzspannung,
wobei der Motor Neodym-, NdFeB-, Magnete umfasst,
wobei je nachdem, wie viel niedriger die Nennspannung ist, unterschiedliche Grade der Leistungskorrektur erhalten werden, wenn während des Teils des Zyklus, in dem die Spannung höher als die Nennspannung des Motors ist, Strom verbraucht wird und kein Strom verbraucht wird, wenn die Spannung niedriger als die Nennspannung des Motors ist, und
wobei die Steuerung des Motors elektronisch erfolgt, um die Drehgeschwindigkeit variieren zu können, und die Steuereinheit so konfiguriert ist, dass die Drehgeschwindigkeit unabhängig von einer Belastung der elektrischen Schleifmaschine auf einem bestimmten Niveau gehalten wird.

4. Elektrische Schleifmaschine nach Anspruch 3, wobei bei einer Netzspannung von 230 V, einem Spitzenwert der gleichgerichteten Netzspannung von 325 V und einer Nennspannung des Motors von 200 V, der Strom zu etwa 60 % der Zeit fließt, wobei der Strom so erzeugt wird, dass kein Strom fließt, wenn die gleichgerichtete Netzspannung gleich der Nennspannung ist, und er linear so ansteigt, dass der Strom 10 A beträgt, wenn die Spannung 325 V beträgt.

## Revendications

1. Procédé pour contrôler une machine de meulage électrique comprenant un moteur d'entraînement électrique qui est un moteur à courant continu sans balais, lequel procédé comprend le redressement de la tension du réseau et le contrôle commuté du moteur,
dans lequel le moteur est dimensionné de telle manière que la tension nominale du moteur est inférieure à la valeur maximale de la tension redressée du réseau,
dans lequel le moteur comprend des aimants en néodyme, NdFeB,
dans lequel le courant est consommé pendant la partie du cycle où la tension est supérieure à la tension nominale du moteur et aucun courant n'est consommé lorsque la tension est inférieure à la tension nominale du moteur, de telle sorte que différents degrés de correction de puissance sont obtenus en fonction de l'abaissement de la tension nominale, et
dans lequel le contrôle du moteur est effectuée électroniquement afin de pouvoir faire varier la vitesse de rotation, et le contrôle est réalisé de telle manière que la vitesse de rotation est maintenue à un niveau donné quelle que soit la charge de la machine de meulage électrique.

2. Procédé selon la revendication 1, dans lequel, si la tension du réseau est de 230 V, la valeur maximale de la tension du réseau redressée de 325 V et la tension nominale du moteur de 200 V, le courant circule environ 60 % du temps,
le courant étant généré de telle manière qu'aucun courant ne circule lorsque la tension secteur redressée est égale à la tension nominale, et qu'il augmente linéairement de telle manière que le courant est de 10 A lorsque la tension est de 325 V.

3. Machine de meulage électrique comprenant un moteur à courant continu sans balais et une unité de contrôle configurée pour le redressement d'une tension secteur et le contrôle commuté du moteur,
dans lequel le moteur est dimensionné de telle manière que la tension nominale du moteur est inférieure à la valeur maximale de la tension rectifiée du réseau,
dans lequel le moteur comprend des aimants en néodyme, NdFeB,
dans laquelle, en fonction de l'abaissement de la tension nominale, différents degrés de correction de puissance sont obtenus lorsque le courant est consommé pendant la partie du cycle où la tension est supérieure à la tension nominale du moteur et aucun courant n'est consommé lorsque la tension est inférieure à la tension nominale du moteur, et
dans lequel le contrôle du moteur est effectué électroniquement afin de pouvoir faire varier la vitesse de rotation, et l'unité de commande est conçue de telle manière que la vitesse de rotation est maintenue à un niveau donné indépendamment de la charge de la machine de meulage électrique.

4. Machine de meulage électrique selon la revendication 3, dans lequel, si la tension du réseau est de 230 V, la valeur maximale de la tension du réseau redressée de 325 V et la tension nominale du moteur de 200 V, le courant circule environ 60 % du temps, le courant étant généré de telle manière qu'aucun courant ne circule lorsque la tension secteur redressée est égale à la tension nominale, et qu'il augmente linéairement de telle manière que le courant est de 10 A lorsque la tension est de 325 V.
